# EUROPÄISCHE PATENTANMELDUNG

(11) **EP 3 351 756 A1**
(43) Veröffentlichungstag der Anmeldung: **25.07.2018**
(21) Anmeldenummer: 17401127.0
(22) Anmeldetag: 12.12.2017
(51) Int. Cl.: F01M 5/00, F16N 39/02

(54) **ÖLVERSORGUNGSSYSTEM UND VERFAHREN ZUM BETREIBEN DESSELBEN**

(30) Priorität: 20.01.2017 DE 102017101090
(71) Anmelder: MAN Diesel & Turbo SE, 86153 Augsburg (DE)
(72) Erfinder: Metz, Kolja, 10711 Berlin (DE)

(57) **Zusammenfassung**

Ölversorgungssystem zur Versorgung mindestens einer Baugruppe einer Brennkraftmaschine oder einer Turbomaschine mit Öl, mit einem Ölvorratsbehälter (10), mit einer Vorlaufleitung (11), über die Öl vom dem Ölvorratsbehälter (10) abführbar ist, mit mindestens einer Ölpumpe (12), mit einer Rücklaufleitung (13), über die Öl in den Ölvorratsbehälter (10) zurückführbar ist, und mit einer Ölkühleinrichtung (14), wobei über die Ölkühleinrichtung (14) eine Ist-Temperatur des Öls im Vorratsbehälter (10) auf eine definierte Soll-Temperatur regelbar ist. Fig. 4

## Beschreibung

Die Erfindung betrifft ein Ölversorgungssystem. Des Weiteren betrifft die Erfindung ein Verfahren zum Betreiben eines solchen Ölversorgungssystems.

Aus der Praxis bekannte Ölversorgungssysteme für Brennkraftmaschinen bzw. für Turbomaschinen verfügen über einen Vorratsbehälter für Öl, wobei über eine Vorlaufleitung und eine mit der Vorlaufleitung zusammenwirkende Ölpumpe Öl vom Vorratsbehälter abgeführt und in Richtung auf mindestens eine Baugruppe der Brennkraftmaschine oder der Turbomaschine geführt werden kann, und wobei über eine Rücklaufleitung das Öl in den Ölvorratsbehälter zurückgeführt werden kann. Aus der Praxis bekannte Ölversorgungssysteme verfügen weiterhin über eine Ölkühleinrichtung, die der Vorlaufleitung zugeordnet ist, und zwar derart, dass die Ist-Temperatur des Öls in der Vorlaufleitung auf eine definierte Soll-Temperatur geregelt wird.

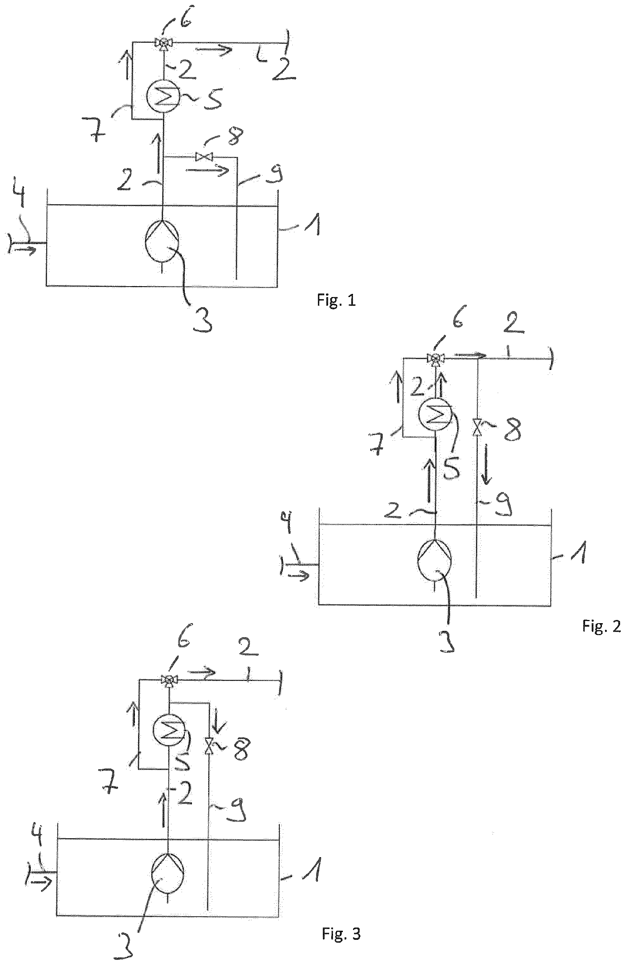

Fig. 1 zeigt einen Ausschnitt aus einem ersten aus dem Stand der Technik bekannten Ölversorgungssystem mit einem Ölvorratsbehälter 1, mit einer Vorlaufleitung 2, mit einer der Vorlaufleitung 2 zugeordneten Ölpumpe 3, mit einer Rücklaufleitung 4 und mit einer Ölkühleinrichtung 5. Dabei ist mit Hilfe der Ölpumpe 3 und der Vorlaufleitung 2 Öl aus dem Vorratsbehälter 1 entnehmbar. Zur Regelung der Ist-Temperatur des aus dem Vorratsbehälter 1 entnommenen Öls ist das Öl über die der Vorlaufleitung 2 zugeordnete Ölkühleinrichtung 5 führbar. Stromabwärts der Ölkühleinrichtung 5 ist der Ölvorlaufleitung 2 ein Temperaturregelventil 6 zugeordnet, über welches eingestellt werden kann, welcher Anteil der aus dem Ölvorratsbehälter 1 mit Hilfe der Ölpumpe 3 geförderten Ölmenge über die Ölkühleinrichtung 5 geführt wird sowie welcher Anteil über eine Bypassleitung 7 an der Ölkühleinrichtung 5 vorbeigeführt wird.

Ferner zeigt Fig. 1 ein VolumenstromregelventilDruckregelventil 8, welches in einer weiteren Bypassleitung 9 positioniert ist, wobei über dieses VolumenstromregelventilDruckregelventil 8 eingestellt werden kann, welcher Anteil der von der Ölpumpe 3 aus dem Vorratsbehälter 1 geförderten Ölmenge tatsächlich in Richtung auf die oder jede vorzugsweise zu schmierende Baugruppe der Brennkraftmaschine oder Turbomaschine geführt wird, und welcher Anteil in den Vorratsbehälter 1 über die Bypassleitung 9 zurückgeführt wird. Bei der Ölpumpe 3 handelt es sich dabei um eine Konstantförderpumpe.

Bei dem Ölversorgungssystem der Fig. 1 dient die Ölkühleinrichtung 5 demnach der Regelung der Ist-Temperatur des Öls innerhalb der Vorlaufleitung 2. Dies ist auch bei den in Fig. 2 und 3 gezeigten Abwandlungen der Fig. 1 der Fall, die sich von dem Ölversorgungssystem der Fig. 1 lediglich dadurch unterscheiden, an welcher Stelle die weitere Bypassleitung 9, in welcher das VolumenstromregelventilDruckregelventil 8 angeordnet ist, von der Vorlaufleitung 2 abzweigen. Während in Fig. 1 diese weitere Bypassleitung 9 stromaufwärts der Ölkühleinrichtung 5 von der Vorlaufleitung 2 abzweigt, zweigt in Fig. 2 diese weitere Bypassleitung 9 stromabwärts der Ölkühleinrichtung 5 sowie stromabwärts des Temperaturregelventils 6 von der Vorlaufleitung 2 ab. In Fig. 3 zweigt die weitere Bypassleitung 9, in der das VolumenstromregelventilDruckregelventil 8 positioniert ist, stromabwärts der Ölkühleinrichtung 5 und stromaufwärts des Temperaturregelventils 6 von der Vorlaufleitung 2 ab. Sämtlichen Ölversorgungssystemen der Fig. 1, 2 und 3 ist gemeinsam, dass die Ölkühleinrichtung 5 jeweils der Regelung der Ist-Temperatur des Öls in der Vorlaufleitung 2 dient. Öl, welches im Ölvorratsbehälter 1 bereitgehalten wird, liegt dort im statischen Normalbetrieb mit einer Öltemperatur vor, die höher ist als diejenige Temperatur, mit welcher das Öl der oder jeder vorzugsweise zu schmierenden Baugruppe der Brennkraftmaschine oder der Turbomaschine zugeführt werden soll. Daher wird in den Ölversorgungssystemen der Fig. 1, 2 und 3 das Öl, welches über die Ölpumpe 3 aus dem Ölvorratsbehälter 1 entnommen wird, innerhalb der Vorlaufleitung 2 mit Hilfe der Ölkühleinrichtung 5 auf eine Ist-Temperatur geregelt, die geringer ist als die Temperatur des Öls innerhalb des Ölvorratsbehälters 1.

Bei den aus der Praxis bekannten Ölversorgungssystemen der Fig. 1, 2 und 3 liegt das Öl im Ölvorratsbehälter 1 demnach mit einer Temperatur vor, die höher ist als eine benötigte Ölvorlauftemperatur. Da die Verweilzeit des Öls im Vorratsbehälter 1 relativ lange ist, unterliegt das Öl dann, wenn dasselbe im Ölvorratsbehälter 1 eine relativ hohe Temperatur aufweist, einer unerwünschten Alterung, wodurch die Zeit reduziert wird, die das Öl insbesondere zur Schmierung von Baugruppen der Brennkraftmaschine oder der Turbomaschine genutzt werden kann.

Hiervon ausgehend liegt der vorliegenden Erfindung die Aufgabe zugrunde, ein Ölversorgungssystem und ein Verfahren zum Betreiben zu schaffen, mit Hilfe derer die Ölalterung reduziert und damit das Öl länger verwendet werden kann.

Diese Aufgabe wird durch ein Ölversorgungssystem nach Anspruch 1 gelöst. Erfindungsgemäß ist über die Ölkühleinrichtung eine Ist-Temperatur des Öls im Vorratsbehälter auf eine definierte Soll-Temperatur regelbar.

Mit der hier vorliegenden Erfindung wird erstmals vorgeschlagen, mit Hilfe der Ölkühleinrichtung des Ölversorgungssystems die Ist-Temperatur des Öls im Vorratsbehälter auf eine definierte Soll-Temperatur zu regeln, sodass das Öl bereits im Ölvorratsbehälter eine Temperatur aufweist, die der gewünschten Ölvorlauftemperatur entspricht. Da bei der Erfindung das im Ölvorratsbehälter bereitgehaltene Öl eine geringere Temperatur aufweist als bei aus der Praxis bekannten Ölversorgungssystemen, unterliegt das Öl einer geringeren Alterung und kann demnach länger verwendet werden.

Vorzugsweise ist die Ölkühleinrichtung einer von der Vorlaufleitung abzweigenden und zum Vorratsbehälter oder zur Rücklaufleitung führenden Bypassleitung zugeordnet. Hiermit kann die Ist-Temperatur des Öls im Vorratsbehälter besonders einfach auf die definierte Soll-Temperatur geregelt werden.

Nach einer vorteilhaften Weiterbildung weist das Ölversorgungssystem ein Temperaturregelventil und/oder ein VolumenstromregelventilDruckregelventil auf. Abhängig von der gewählten Konfiguration des Ölversorgungssystems weist dasselbe entweder ausschließlich ein Temperaturregelventil oder ausschließlich ein VolumenstromregelventilDruckregelventil oder sowohl ein Temperaturregelventil als auch ein VolumenstromregelventilDruckregelventil auf. Dann, wenn zwei Ölpumpen innerhalb des Ölversorgungssystems zum Einsatz kommen, die beide hinsichtlich ihres Ölvolumenstroms regelbar sind, kann sowohl auf ein VolumenstromregelventilDruckregelventil als auch auf ein Temperaturregelventil verzichtet werden.

Über das Temperaturregelventil ist einstellbar, welcher Anteil der von der Ölpumpe über die Vorlaufleitung aus dem Ölvorratsbehälter entnommenem Ölmenge zur Regelung der Ist-Temperatur des Öls im Vorratsbehälter auf die definierte Soll-Temperatur über die Ölkühleinrichtung zurück in den Vorratsbehälter führbar ist. Vorzugsweise ist das Temperaturregelventil der vom Ölvorratsbehälter wegführenden Vorlaufleitung derart zugeordnet ist, dass die Bypassleitung, welcher die Ölkühleinrichtung zugeordnet ist, im Bereich des Temperaturregelventil von der Vorlaufleitung abzweigt. Bei Verwendung des Temperaturregelventils kann bei einfachem konstruktivem Aufbau die Regelung der Ist-Temperatur des Öls im Vorratsbehälter erfolgen.

Über das VolumenstromregelventilDruckregelventil ist einstellbar, welcher Anteil der von der Ölpumpe über die Vorlaufleitung aus dem Ölvorratsbehälter entnommenem Ölmenge in Richtung auf die oder jede Baugruppe der Brennkraftmaschine oder der Turbomaschine führbar ist. Vorzugsweise ist das VolumenstromregelventilDruckregelventil einer von der Vorlaufleitung abzweigenden und zum Vorratsbehälter oder zur Rücklaufleitung oder zur Bypassleitung führenden weiteren Bypassleitung zugeordnet. Unter Verwendung des VolumenstromregelventilDruckregelventils kann die Regelung der Ist-Temperatur des Öls im Vorratsbehälter auf einfache konstruktive Art und Weise erfolgen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einem ersten Ölversorgungssystem nach dem Stand der Technik;
- Fig. 2: einen Ausschnitt aus einem zweiten Ölversorgungssystem nach dem Stand der Technik;
- Fig. 3: einen Ausschnitt aus einem dritten Ölversorgungssystem nach dem Stand der Technik;
- Fig. 4: einen Ausschnitt aus einem ersten erfindungsgemäßen Ölversorgungs-system;
- Fig. 5: einen Ausschnitt aus einem zweiten erfindungsgemäßen Ölversorgungs-system;
- Fig. 6: einen Ausschnitt aus einem dritten erfindungsgemäßen Ölversorgungs-system;
- Fig. 7: einen Ausschnitt aus einem vierten erfindungsgemäßen Ölversorgungs-system;
- Fig. 8: einen Ausschnitt aus einem fünften erfindungsgemäßen Ölversorgungs-system;
- Fig. 9: einen Ausschnitt aus einem sechsten erfindungsgemäßen Ölversor-gungssystem;
- Fig. 10: einen Ausschnitt aus einem siebten erfindungsgemäßen Ölversorgungs-system;
- Fig. 11: einen Ausschnitt aus einem achten erfindungsgemäßen Ölversorgungs-system; und
- Fig. 12: einen Ausschnitt aus einem neunten erfindungsgemäßen Ölversorgungssystem.

Die Erfindung betrifft ein Ölversorgungssystem zur Versorgung mindestens einer Baugruppe einer Brennkraftmaschine oder einer Turbomaschine mit Öl, vorzugsweise Schmieröl.

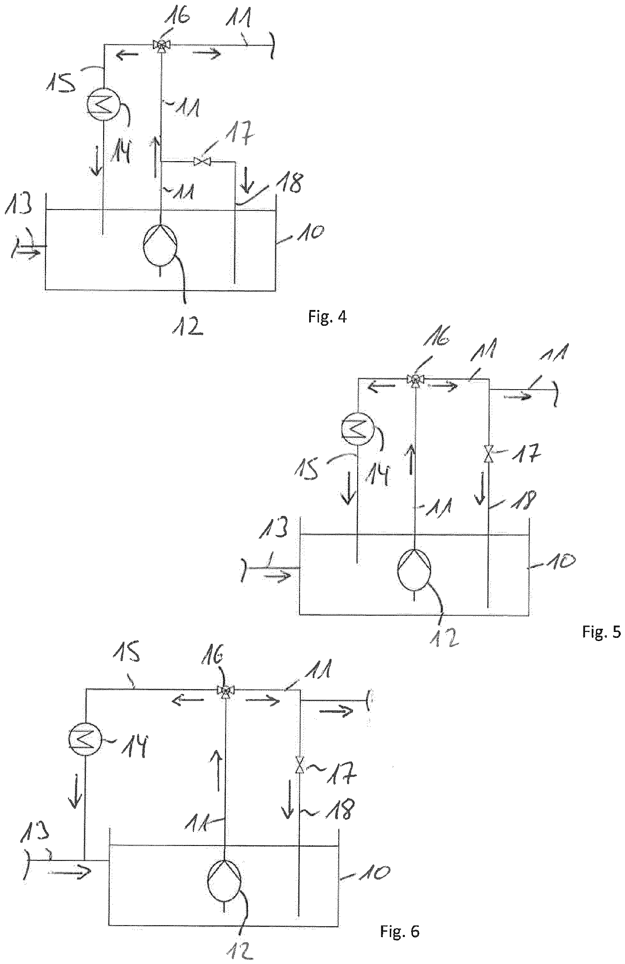

Fig. 4 zeigt einen Ausschnitt aus einem ersten erfindungsgemäßen Ölversorgungssystem im Bereich eines Ölvorratsbehälters 10, in welchem Schmieröl bereitgehalten wird. Ferner zeigt Fig. 4 eine Vorlaufleitung 11 sowie eine der Vorlaufleitung 11 zugeordnete Ölpumpe 12, wobei über die Ölpumpe 12 aus dem Vorratsbehälter 10 Öl entnommen und über die Vorlaufleitung 11 in Richtung auf mindestens eine zu schmierende Baugruppe der Brennkraftmaschine oder der Turbomaschine geführt werden kann. Öl, welches über die oder jede zu schmierende Baugruppe gefördert wurde, fließt über eine Rücklaufleitung 13 zurück in den Vorratsbehälter 10. Das Ölversorgungssystem der Fig. 4 verfügt weiterhin über eine Ölkühleinrichtung 14. Die Ölkühleinrichtung 14 dient jedoch nicht, wie im Stand der Technik üblich, der Regelung der Ist-Temperatur des Öls in der Vorlaufleitung 11, sondern vielmehr erfindungsgemäß der Regelung der Ist-Temperatur des Öls im Vorratsbehälter 10 auf eine definierte Soll-Temperatur. Die Ölkühleinrichtung 14 ist dabei gemäß Fig. 4 in einer von der Vorlaufleitung 11 abzweigenden und zum Vorratsbehälter 10 führenden Bypassleitung 15 angeordnet.

Das Ölversorgungssystem der Fig. 4 verfügt weiterhin über ein Temperaturregelventil 16 und ein VolumenstromregelventilDruckregelventil 17. Das Temperaturregelventil 16 ist innerhalb der vom Ölvorratsbehälter 10 wegführenden Vorlaufleitung 11 derart angeordnet, dass die Bypassleitung 15, in welcher die Ölkühleinrichtung 14 angeordnet ist, im Bereich des Temperaturregelventils 16 von der Vorlaufleitung 18 11 abzweigt. Das Temperaturregelventil 16 bestimmt dabei, welcher Anteil der von der Ölpumpe 12 über die Vorlaufleitung 11 aus dem Ölvorratsbehälter 10 entnommenen Ölmenge zur Regelung der Ist-Temperatur des Öls im Vorratsbehälter 10 auf die definierte Soll-Temperatur über die Ölkühleinrichtung 14 und damit über die Bypassleitung 14 15 zurück in den Vorratsbehälter 10 geführt wird.

Bei der Ölpumpe 12 der Fig. 4 handelt es sich um eine Konstantförderpumpe. Mit dem VolumenstromregelventilDruckregelventil 17 kann eingestellt werden, welcher Anteil der von der Ölpumpe 12 über die Vorlaufleitung 11 aus dem Ölvorratsbehälter entnommenen Ölmenge in Richtung auf die oder jede Baugruppe führbar ist, wobei in Fig. 4 dabei eine weitere Bypassleitung 18, in welcher das VolumenstromregelventilDruckregelventil 17 angeordnet ist, stromaufwärts des Temperaturregelventils 16 von der Vorlaufleitung 11 abzweigt. Öl, welches über die Ölpumpe 12 aus dem Vorratsbehälter 10 gefördert wird, kann demnach abhängig von der Öffnungsstellung des VolumenstromregelventilDruckregelventils 17 über die Bypassleitung 18 in den Vorratsbehälter 10 und abhängig von der Stellung des Temperaturregelventils 16 über die Bypassleitung 15 und damit über die in der Bypassleitung 15 positionierte Ölkühleinrichtung 14 in den Vorratsbehälter 10 zurückgeführt werden.

Fig. 5 zeigt eine Variante des Ölversorgungssystems der Fig. 4, in welcher die Bypassleitung 18, in welcher das VolumenstromregelventilDruckregelventil 17 positioniert ist, nicht stromaufwärts des Temperaturregelventils 16 sondern vielmehr stromabwärts des Temperaturregelventils 16 von der Vorlaufleitung 11 abzweigt. Hinsichtlich aller übrigen Details stimmt jedoch das Ausführungsbeispiel der Fig. 5 mit dem Ausführungsbeispiel der Fig. 4 überein, sodass zur Vermeidung unnötiger Wiederholungen auf die obigen Ausführungen zum Ausführungsbeispiel der Fig. 4 verwiesen wird.

Fig. 6 zeigt eine Variante des Ölversorgungssystems der Fig. 5, in welcher die Bypassleitung 15, in der die Ölkühleinrichtung 14 positioniert ist, nicht in den Vorratsbehälter 10 mündet, sondern vielmehr in den Bereich der Rücklaufleitung 13, um das über die Ölkühleinrichtung 14 geführte und gekühlte Öl stromaufwärts des Vorratsbehälters 13 10 mit dem über die Rücklaufleitung 13 strömenden Öl zu mischen.

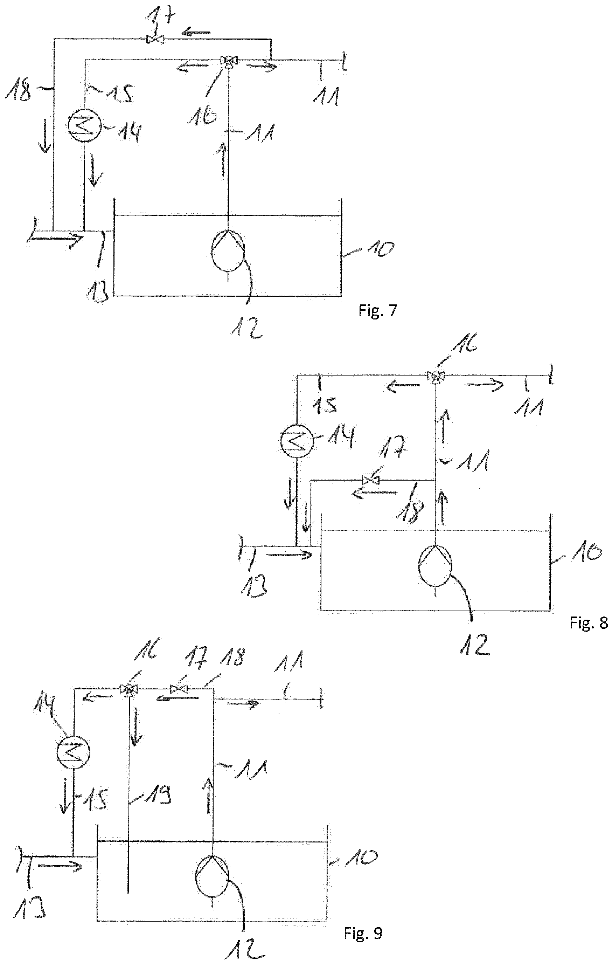

Fig. 7 zeigt eine Variante des Ölversorgungssystems der Fig. 6, bei welchem die stromabwärts des Temperaturregelventils 16 von der Vorlaufleitung 11 abzweigende weitere Bypassleitung 18, in der das VolumenstromregelventilDruckregelventil 17 angeordnet ist, nicht in den Vorratsbehälter 10 mündet, sondern vielmehr ebenso wie die Bypassleitung 15 in die Rücklaufleitung 13.

Das Ölversorgungssystem der Fig. 8 zeigt eine Variante des Ölversorgungssystems der Fig. 7, in welcher die weitere Bypassleitung 18, die das VolumenstromregelventilDruckregelventil 17 aufnimmt, in Übereinstimmung zur Variante der Fig. 4 stromaufwärts des Temperaturregelventils 16 von der Vorlaufleitung 11 abzweigt. Beide Bypassleitungen 15, 18 münden dabei nicht in den Vorratsbehälter 10 sondern vielmehr in die Rücklaufleitung 13. In der Variante der Fig. 8 kann die weitere Bypassleitung 18 auch stromaufwärts der Ölkühleinrichtung 14 in die Bypassleitung 15 münden, um auch das über die Bypassleitung 18 von der Vorlaufleitung 11 abgezweigte Öl über die Ölkühleinrichtung 14 zu führen.

Fig. 9 zeigt eine Variante der Erfindung, in welcher die weitere Bypassleitung 18, in der VolumenstromregelventilDruckregelventil 17 anordnet ist, in die Bypassleitung 15 müundet und in welchem das VolumenstromregelventilDruckregelventil 17 dem Temperaturregelventil 16 vorgelagert ist. In diesem Fall bestimmt das VolumenstromregelventilDruckregelventil 17 die Aufteilung der mit Hilfe der Ölpumpe 12 und der Vorlaufleitung 11 aus dem Vorratsbehälter 10 entnommenen Ölmenge, die entweder als erster Teilstrom über die Vorlaufleitung 11 in Richtung auf die oder jede zu schmierende Baugruppe der Brennkraftmaschine oder der Turbomaschine geführt wird oder lals zweiter Teilstrom über das Temperaturregelventil 16 geführt wird. Das Temperaturregelventil 16 teilt den zweiten Teilstrom derart auf, dass ein Teil über die Bypassleitung 15 und die in die Bypassleitung 15 integrierte Ölkühleinrichtung 14 und ein anderer Teil über eine weitere Bypassleitung 19 unter Umgehung der Ölkühleinrichtung 14 in Richtung auf den Vorratsbehälter 10 zurückgeführt wird, und zwar im Falle der Bypassleitung 15 über die Rücklaufleitung 13 und im Falle der Bypassleitung 19 unmittelbar in den Vorratsbehälter 10. Die Bypassleitung 15 kann jedoch auch unmittelbar in den Vorratsbehälter 10 münden. Ferner kann die Bypassleitung 19 auch über die Rücklaufleitung 13 mittelbar in den Vorratsbehälter 10 münden.

In den Ausführungsbeispielen der Fig. 4 bis 9 umfasst das Ölversorgungssystem zusätzlich zur Ölpumpe 12 sowie Ölkühleinrichtung 14 demnach ein Temperaturregelventil 16 sowie VolumenstromregelventilDruckregelventil 17, wobei in den Ausführungsbeispielen der Fig. 4 bis 9 die Ölpumpe 12 jeweils als Konstantförderpumpe ausgeführt ist. Dabei nutzen die Ölversorgungssysteme der Fig. 4 bis 9 eine einzige Ölpumpe 12.

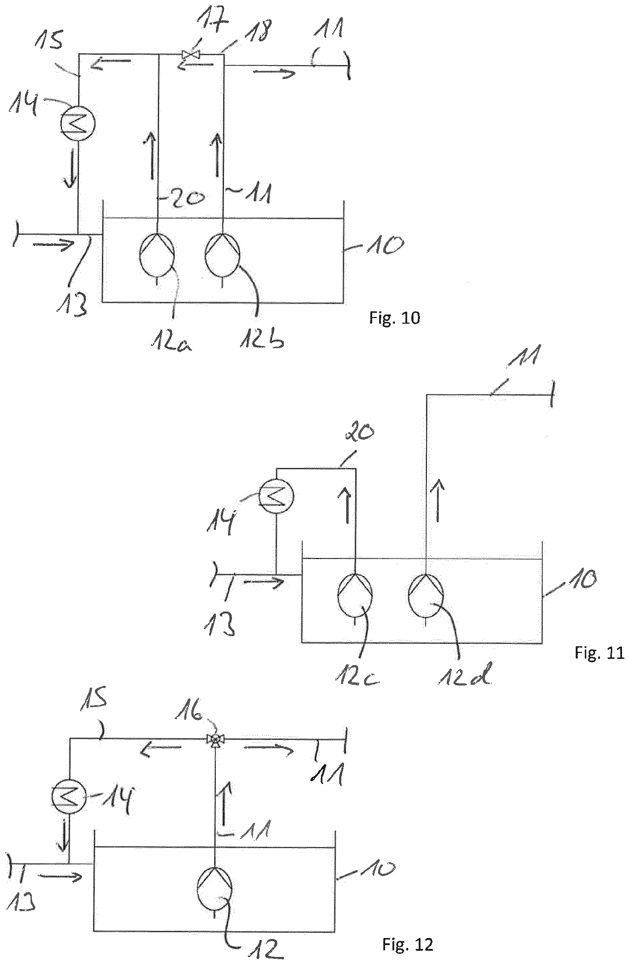

Fig. 10 zeigt einen Ausschnitt aus einem Ölversorgungssystem, welches zwei Ölpumpen 12a und 12b nutzt und ohne Temperaturregelventil auskommt. Im Ausführungsbeispiel der Fig. 10, welches zwei Ölpumpen 12a, 12b nutzt, ist die Ölpumpe 12b der Vorlaufleitung 11 zugeordnet, wohingegen die Ölpumpe 12a über eine parallele Leitung 20 Öl aus dem Vorratsbehälter 10 fördert. Bei der Ölpumpe 12b handelt es sich um eine Konstantförderpumpe und bei der Förderpumpe 12a um eine hinsichtlich ihrer Fördermenge regelbare Förderpumpe.

Das VolumenstromregelventilDruckregelventil 17 bestimmt, welcher Anteil der in Fig. 10 über die Konstantförderpumpe 12b geförderten Ölmenge in Richtung auf die oder jede zu schmierende Baugruppe geführt wird. Derjenige Anteil der mit Hilfe der Ölpumpe 12b aus dem Vorratsbehälter 10 entnommenen Ölmenge, der nicht über die Vorlaufleitung 11 in Richtung auf die oder jede zu schmierende Baugruppe geführt wird, wird über die Bypassleitung 15 gefördert, in welcher die Ölkühleinrichtung 14 positioniert ist. Sollte diese Menge an Öl, die über das VolumenstromregelventilDruckregelventil 17 von der Vorlaufleitung 11 in Richtung auf die Bypassleitung 15 abgezweigt wird, zur Einstellung der Ist-Temperatur des Öls im Vorratsbehälter 10 nicht ausreichend sein, so wird über die Ölpumpe 12a und die Leitung 20 zusätzliche Ölmenge aus dem Vorratsbehälter 10 gefördert und über die Ölkühleinrichtung 14 transportiert, um die Ist-Temperatur des Öls im Vorratsbehälter 10 auf die definierte Soll-Temperatur zu regeln. Die Bypassleitung 15 mündet dabei in die Rücklaufleitung 13.

Es sei an dieser Stelle darauf hingewiesen, dass in allen Ausführungsbeispielen der Fig. 4 bis10, 12 dDie Bypassleitung 15 entweder in die Rücklaufleitung 13 und über die Rücklaufleitung 13 mittelbar in den Vorratsbehälter 10 oder kann in Fig. 10 jedoch auch unmittelbar in den Vorratsbehälter 10 münden kann. Das Münden der Bypassleitung 15 in die Rücklaufleitung 13 ist für eine verbesserte Durchmischung von Vorteil.

Fig. 11 zeigt ein Ölversorgungssystem mit zwei Ölpumpen 12c und 12d, welches weder das Temperaturregelventil noch das VolumenstromregelventilDruckregelventil aufweist. In Fig. 11 handelt es sich bei beiden Ölpumpen 12c und 12d um hinsichtlich ihrer Förderleistung regelbare Ölpumpen.

Über die Ölpumpe 12d der Fig. 11 wird Öl aus dem Vorratsbehälter 10 entnommen und über die Vorlaufleitung 11 in Richtung auf die oder jede zu schmierende Baugruppe der Brennkraftmaschine oder Turbomaschine gefördert. Über die Ölpumpe 12c der Fig. 11 ist Öl über die Leitung 20, in welcher die Ölkühleinrichtung 14 angeordnet ist, förderbar, um über diese Ölmenge, die über die Ölkühleinrichtung 14 gefördert wird, die Ist-Temperatur des Öls im Vorratsbehälter 10 auf die definierte Soll-Temperatur zu regeln. Dabei mündet die Ölleitung 20 in die Rücklaufleitung 13, kann jedoch auch unmittelbar in den Vorratsbehälter 10 münden. Wie bereits ausgeführt, benötigt die Variante der Fig. 11 zwei hinsichtlich ihrer Förderleistung regelbare Ölpumpen 12c und 12d.

Ein weiteres Ausführungsbeispiel eines erfindungsgemäßen Ölversorgungssystems zeigt Fig. 12. Das Ölversorgungssystem der Fig. 12 nutzt ebenso wie die Ölversorgungssysteme der Fig. 4 bis 9 eine einzige Ölpumpe 12, die jedoch nicht als Konstantförderpumpe, sondern als hinsichtlich ihrer Fördermenge regelbare Förderpumpe ausgeführt ist. Ferner nutzt das Ölversorgungssystem der Fig. 12 ein Temperaturregelventil 16, jedoch kein VolumenstromregelventilDruckregelventil. Öl, welches mit Hilfe der hinsichtlich ihrer Förderleistung regelbaren Ölpumpe 12 über die Vorlaufleitung 11 aus dem Vorratsbehälter 10 entnommen wird, wird am Temperaturregelventil 16 in zwei Teilströme aufgeteilt, nämlich in einen Teilstrom, welcher der oder jeder zu schmierenden Baugruppe der Brennkraftmaschine oder Turbomaschine über die Vorlaufleitung 11 zugeführt wird, sowie in einen Teilstrom, welcher über die Bypassleitung 15 sowie über die in der Bypassleitung 15 angeordnete Ölkühleinrichtung 14 geführt wird, um wiederum die Ist-Temperatur des Öls im Vorratsbehälter 10 auf die definierte Soll-Temperatur zu regeln.

Mit der Erfindung wird die Temperatur des Öls innerhalb des Vorratsbehälters 10 geregelt. Daher kann mit der Erfindung im Vorratsbehälter 10 eine geringere Öltemperatur eingestellt werden wie nach dem Stand der Technik. Hierdurch kann die Lebensdauer des Öls verlängert werden. Dabei entspricht die Soll-Temperatur des Öls im Vorratsbehälter 10 derjenigen Temperatur, mit der das Öl den oder jeder zu schmierenden Baugruppe zugeführt wird. Bei Reduzierung der Öltemperatur innerhalb des Vorratsbehälters 10 auf dieses Temperaturniveau können auch Einflüsse von Temperaturschwankungen besser kompensiert werden.

### Bezugszeichenliste

- 1: Ölvorratsbehälter
- 2: Vorlaufleitung
- 3: Ölpumpe
- 4: Rücklaufleitung
- 5: Ölkühleinrichtung
- 6: Temperaturregelventil
- 7: Bypassleitung
- 8: VolumenstromregelventilDruckregelventil
- 9: Bypassleitung
- 10: Ölvorratsbehälter
- 11: Vorlaufleitung
- 12: Ölpumpe
- 12a: Ölpumpe
- 12b: Ölpumpe
- 12c: Ölpumpe
- 12d: Ölpumpe
- 13: Rücklaufleitung
- 14: Ölkühleinrichtung
- 15: Bypassleitung
- 16: Temperaturregelventil
- 17: VolumenstromregelventilDruckregelventil
- 18: Bypassleitung
- 19: Bypassleitung
- 20: Leitung

## Patentansprüche

1. Ölversorgungssystem zur Versorgung mindestens einer Baugruppe einer Brennkraftmaschine oder einer Turbomaschine mit Öl, mit einem Ölvorratsbehälter (10), mit einer Vorlaufleitung (11), über die Öl vom dem Ölvorratsbehälter (10) abführbar ist, mit mindestens einer Ölpumpe (12, 12a, 12b, 12c, 12d), mit einer Rücklaufleitung (13), über die Öl in den Ölvorratsbehälter (10) zurückführbar ist, und mit einer Ölkühleinrichtung (14), **dadurch gekennzeichnet, dass** über die Ölkühleinrichtung (14) eine Ist-Temperatur des Öls im Vorratsbehälter (10) auf eine definierte Soll-Temperatur regelbar ist.

2. Ölversorgungssystem nach Anspruch 1, **dadurch gekennzeichnet, dass** die Ölkühleinrichtung (14) einer von der Vorlaufleitung (11) abzweigenden und zum Vorratsbehälter (10) oder zur Rücklaufleitung (13) führenden Bypassleitung (15) zugeordnet ist.

3. Ölversorgungssystem nach Anspruch 1 oder 2, **gekennzeichnet durch** ein Temperaturregelventil (16), über welches einstellbar ist, welcher Anteil der von der Ölpumpe (12) über die Vorlaufleitung (11) aus dem Ölvorratsbehälter (10) entnommenem Ölmenge zur Regelung der Ist-Temperatur des Öls im Vorratsbehälter (10) auf die definierte Soll-Temperatur über die Ölkühleinrichtung (14) zurück in Richtung auf den Vorratsbehälter (10) führbar ist.

4. Ölversorgungssystem nach einem der Ansprüche 1 bis 3, **gekennzeichnet durch** ein VolumenstromregelventilDruckregelventil (17), über welches einstellbar ist, welcher Anteil der von der Ölpumpe (12, 12b) über die Vorlaufleitung (11) aus dem Ölvorratsbehälter (10) entnommenem Ölmenge in Richtung auf die oder jede Baugruppe führbar ist.

5. Ölversorgungssystem nach Anspruch 2 oder 3, **dadurch gekennzeichnet, dass** das Temperaturregelventil (16) der vom Ölvorratsbehälter (10) wegführenden Vorlaufleitung (11) derart zugeordnet ist, dass die Bypassleitung (15) im Bereich des Temperaturregelventil (16) von der Vorlaufleitung (11) abzweigt.

6. Ölversorgungssystem nach Anspruch 4 oder 5, **dadurch gekennzeichnet, dass** das VolumenstromregelventilDruckregelventil (17) einer von der Vorlaufleitung (11) abzweigenden und zum Vorratsbehälter (10) oder zur Rücklaufleitung (13) oder zur Bypassleitung (15) führenden weiteren Bypassleitung (18) zugeordnet ist.

7. Ölversorgungssystem nach Anspruch 6, **dadurch gekennzeichnet, dass** die weitere Bypassleitung (18) stromaufwärts des Temperaturregelventils (16) von der Vorlaufleitung (11) abzweigt.

8. Ölversorgungssystem nach Anspruch 6, **dadurch gekennzeichnet, dass** die weitere Bypassleitung (18) stromabwärts des Temperaturregelventils (16) von der Vorlaufleitung (11) abzweigt

9. Ölversorgungssystem nach einem der Ansprüche 1 bis 8, **dadurch gekennzeichnet, dass** die der Vorlaufleitung (11) zugeordnete Ölpumpe (12, 12b) eine Konstantförderpumpe ist.

10. Ölversorgungssystem nach einem der Ansprüche 1 bis 8, **dadurch gekennzeichnet, dass** die der Vorlaufleitung (11) zugeordnete Ölpumpe (12) eine regelbare Förderpumpe ist.

11. Ölversorgungssystem nach einem der Ansprüche 1 bis 8, **dadurch gekennzeichnet, dass** dasselbe zwei Ölpumpen (12a, 12b) umfasst, nämlich eine Konstantförderpumpe und eine regelbare Förderpumpe.

12. Ölversorgungssystem nach einem der Ansprüche 1 bis 8, **dadurch gekennzeichnet, dass** dasselbe zwei Ölpumpen (12c, 12d) umfasst, nämlich zwei regelbare Förderpumpen.

13. Verfahren zum Betreiben eines Ölversorgungssystems nach einem der Ansprüche 1 bis 12, **dadurch gekennzeichnet, dass** die Ist-Temperatur des Öls im Vorratsbehälter 10 auf die definierte Soll-Temperatur geregelt wird.
